Europäisches Patentamt

European Patent Office

Office européen des brevets

(11) Veröffentlichungsnummer: **0 456 850 A1**

# EUROPÄISCHE PATENTANMELDUNG

(21) Anmeldenummer: 90109052.2

(22) Anmeldetag: **14.05.90**

(51) Int. Cl.⁵: **B27F 1/02**, B27C 5/06,
B27C 9/04

(43) Veröffentlichungstag der Anmeldung:
**21.11.91 Patentblatt 91/47**

(84) Benannte Vertragsstaaten:
**AT BE CH DE ES FR GB GR IT LI LU NL SE**

(71) Anmelder: **Hirsch, Wilhelm**
**Gerhart-Hauptmann-Strasse 47**
**W-7417 Pfullingen(DE)**

(72) Erfinder: **Zehender, Jürgen**
**Beethovenstrasse 39**
**W-7088 Hüttlingen(DE)**

(74) Vertreter: **Wehser, Wulf, Dipl.-Ing. et al**
**Patentanwälte Wehser und Partner**
**Roscherstrasse 12**
**W-3000 Hannover 1(DE)**

(54) **Vorrichtung zum Längsprofilieren von Hölzern.**

(57) Eine Vorrichtung (1)zum Längsprofilieren von Hölzern, insbesondere von Fensterhölzer (4), bei welcher in Reihe mehrere Längsprofilierspindeln (2) angeordnet sind, an welchen die Hölzer (4) mittels einer Vorschubeinrichtung (7,8) vorbeigeführt werden, soll so ausgebildet werden, daß in jeder Bearbeitungslage während des Vorschubes der Hölzer (4) eine exakte Positionierung gegeben ist.

Hierzu ist erfindungsgemäß vorgesehen, daß die zu bearbeitenden Hölzer (4) durch ein Transportelement (7,8) bewegt werden, welches formschlüssig entlang der Vorschubbahn innerhalb der Längsprofiliereinrichtung (1) bewegbar ist und zumindest kraftschlüssig mit dem jeweils zu bearbeitenden Holz verbunden ist.

**F i g . 1**

EP 0 456 850 A1

Die Erfindung betrifft eine Vorrichtung zum Längsprofilieren von Hölzern, insbesondere von Fensterhölzern, bei welcher in Reihe mehrere Längsprofilierspindeln angeordnet sind, an welchen die Hölzer mittels einer Vorschubeinrichtung vorbeigeführt werden.

Bei einer bekannten Längsprofiliereinrichtung dieser Art besteht die Vorschubeinrichtung aus auf der Oberseite der zu bearbeitenden Hölzer angeordneten und angetriebenen Vorschubrollen, welche kraftschlüssig an den Hölzern angreifen und diese so transportieren.

Nachteilig bei dieser bekannten Anordnung ist es, daß aufgrund des Reibungsschlusses zwischen den Vorschubrollen und den Hölzern die Möglichkeit eines Schlupfes besteht, so daß eine exakte maßgenaue Längsführung der Hölzer nicht gegeben ist.

Der Erfindung liegt demgemäß die Aufgabe zugrunde, eine Vorrichtung der eingangs genannten Art so auszubilden, daß in jeder Bearbeitungslage während des Vorschubes der Hölzer eine exakte Positionierung gegeben ist. Eine solche exakte Positionierung ist mit der bekannten Anordnung aufgrund des nur kraftschlüssig wirkenden Antriebes nicht möglich.

Diese Aufgabe wird erfindungsgemäß dadurch gelöst, daß die zu bearbeitenden Hölzer durch ein Transportelement bewegt werden, welches formschlüssig entlang der Vorschubbahn innerhalb der Längsprofiliereinrichtung bewegbar ist und zumindest kraftschlüssig mit dem jeweiligen zu bearbeitenden Holz verbunden ist.

Mit dieser Anordnung wird erreicht, daß das Werkstück in jeder Vorschublage eine genau festgelegte bzw. festzulegende Position einnimmt, so daß diese Position zu weiteren exakten Bearbeitungen des Fensterholzes herangezogen werden kann. Diese lagegenaue Bearbeitung kann damit sowohl während des Längsprofiliervorganges als auch vor diesem als auch nach diesem vorgenommen werden.

Das Transportelement kann auf verschiedene Weise, beispielsweise mittels einer Zahnstange, mittels eines Zahnriemens gegebenenfalls in Verbindung mit einer nc-Achse, mittels einer Spindel oder dergleichen angetrieben sein.

Vorteilhaft ist es bei der erfindungsgemäßen Anordnung außerdem, daß neben dem durch die Vorschubrollen der bekannten Anordnung bedingten Schlupf auch andere ungleichmäßige Vorschubbewegungen vermieden werden, wie sie beispielsweise bei bestimmten Kettentransporten auftreten.

Insbesondere ist es mit der erfindungsgemäßen Anordnung möglich, an bestimmten Stellen genau bemessene Teilprofilierungen vorzunehmen, was beispielsweise bei Türen, deren Zargen nicht unnötig geschwächt werden sollen, notwendig ist.

Besonders vorteilhaft ist es, wenn das Transportelement lagegenau anhaltbar ist. Dies ist insbesondere dann von Vorteil, wenn an exakt zu bestimmenden und festzulegenden Stellen Bohrungen in die Werkstücke eingebracht werden sollen.

Die erfindungsgemäße Anordnung kann insbesondere auch angewendet werden, um lagegenau die Anbringstellen für Beschläge und gegebenenfalls die hierfür erforderlichen Bohrungen in das Werkstück einzubringen.

Die lagegenaue Anbringung von Schrauben oder anderen Befestigungsmitteln ist ebenfalls möglich.

Die erfindungsgemäße Anordnung hat insbesondere den Vorteil, daß die von oben auf das Werkstück wirkenden Transportrollen der bekannten Anordnung entfallen können, so daß mühelos Bearbeitungen der Werkstücke von oben vorgenommen werden können. Bei der bekannten Anordnung sind hier die Vorschubrollen im Wege.

Das Transportelement kann in besonders vorteilhafter Weise als wenigstens ein Greifer ausgebildet sein, welcher das Werkstück entweder an dessen in Arbeitsrichtung vorderen Ende erfaßt und durch die Längsprofiliereinrichtung zieht oder aber an dessen hinteren Ende angreift und das Werkstück in Form einer Schiebebewegung transportiert. Es können auch Greifer an beiden Enden des Werkstückes vorgesehen sein, die synchron bewegbar sind. Unter Umständen ist es daher auch möglich, das Transportelement als reinen Schieber auszubilden.

Durch die Verwendung eines Greifers können die Werkstücke auch unabhängig von ihrer Stärke sicher bewegt werden, da die Greiferöffnung größer oder kleiner einstellbar ist, wobei dieser Vorgang auch automatisiert werden kann.

Bei der bekannten Anordnung müssen demgegenüber die Vorschubrollen in Abhängigkeit von der Stärke des Werkstückes einen mehr oder weniger großen Abstand zur Fläche des Arbeitstisches haben, was entweder aufwendige Einstellvorrichtungen bedingt oder dazu führt, daß unterschiedlich starke Werkstücke mit unterschiedlichen Drücken gefördert werden.

Da bei der Anwendung eines Greifers, der am in Arbeitsrichtung vorderen Ende des Werkstückes angreift, dieser das Werkstück gegen die Zerspanungskraft der Frässpindeln zum Längsprofilieren ziehen und insofern mit relativ großem Druck am Werkstück angreifen muß, bietet die erfindungsgemäße Anordnung die Möglichkeit, das Werkstück zunächst an den Frässpindeln ohne Eingriff von deren Werkzeugen vorbeizuführen und dann in Gegenrichtung mittels des Greifers nach hinten zu drücken, wobei sich das Werkstück an dem Greifer abstützt, so daß eine Druckbeanspruchung des Holzes im Greiferbereich, die durch Reibungsschluß aufrechterhalten werden muß, nicht notwendig ist.

Selbstverständlich ist für diese Bearbeitungsvorgänge eine Führung des Werkstückes notwendig.

Die erfindungsgemäße Anordnung ist besondere für eine Holzbearbeitungsmaschine geeignet, die aus wenigstens einer Einrichtung zum Zapfenschlagen und Schlitzen und aus wenigstens einer Vorrichtung zum Längsprofilieren mit einer Vorschubeinrichtung besteht, deren Vorschubbahn im rechten Winkel zur Bewegungsbahn des Werkstückes im Bereich der Zapfen- und Schlitzeinrichtung liegt.

Bei einer Anwendung der erfindungsgemäßen Vorrichtung auf eine derartige Holzbearbeitungsmaschine kann nämlich das zu bearbeitende Werkstück aus der Zapfenschlag- und Schlitzeinrichtung heraus in eine exakte Lage zu der Längsprofiliereinrichtung gebracht werden, von wo aus es jeweils lagegenau an den Längsprofilierspindeln vorbeibewegbar ist. Damit besteht die Möglichkeit, bereits Bearbeitungen des Werkstückes vor dem Längsprofiliervorgang lagegenau vorzunehmen bzw. während oder nach diesem anzubringen.

Die Erfindung wird im folgenden anhand von Ausführungsbeispielen in der Zeichnung näher erläutert.

Fig. 1   zeigt in perspektivischer Darstellung eine Ausführungsform der erfindungsgemäßen Vorrichtung.

Fig. 2   ist die Draufsicht auf die Vorrichtung nach Fig. 1.

Fig. 3   zeigt in Draufsicht in schematischer Darstellung eine Holzbearbeitungsmaschine, auf welche die Erfindung Anwendung finden kann.

Fig. 4   zeigt in Draufsicht in schematischer Darstellung eine andere Ausführungsform einer Holzbearbeitungsmaschine unter Anwendung der erfindungsgemäßen Vorrichtung.

Fig. 5   zeigt in Draufsicht in schematischer Darstellung eine weitere Ausführungsform einer für die Anwendung der erfindungsgemäßen Vorrichtung geeigneten Holzbearbeitungsmaschine.

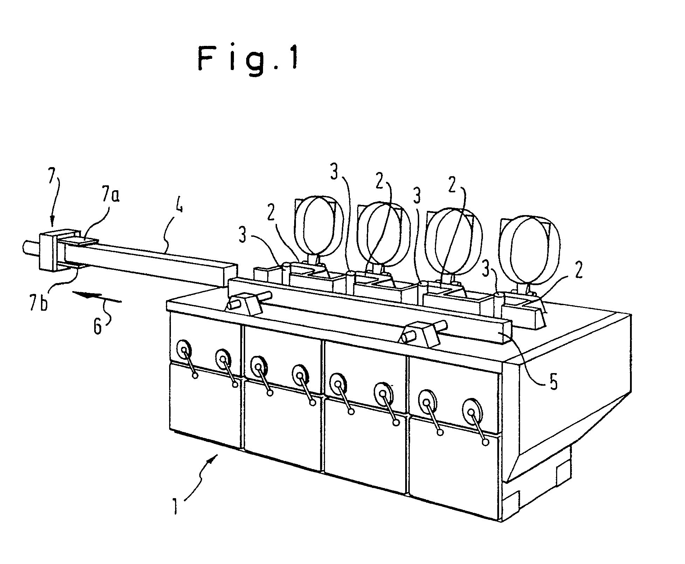

Gemäß Fig. 1 ist eine Vorrichtung 1 zum Längsprofilieren von Hölzern, insbesondere von Fensterhölzern, vorgesehen, bei welcher in Reihe mehrere Längsprofilierspindeln 2 angeordnet sind, die mit Fräswerkzeugen 3 zum Längsprofilieren von Hölzern 4 versehen sind.

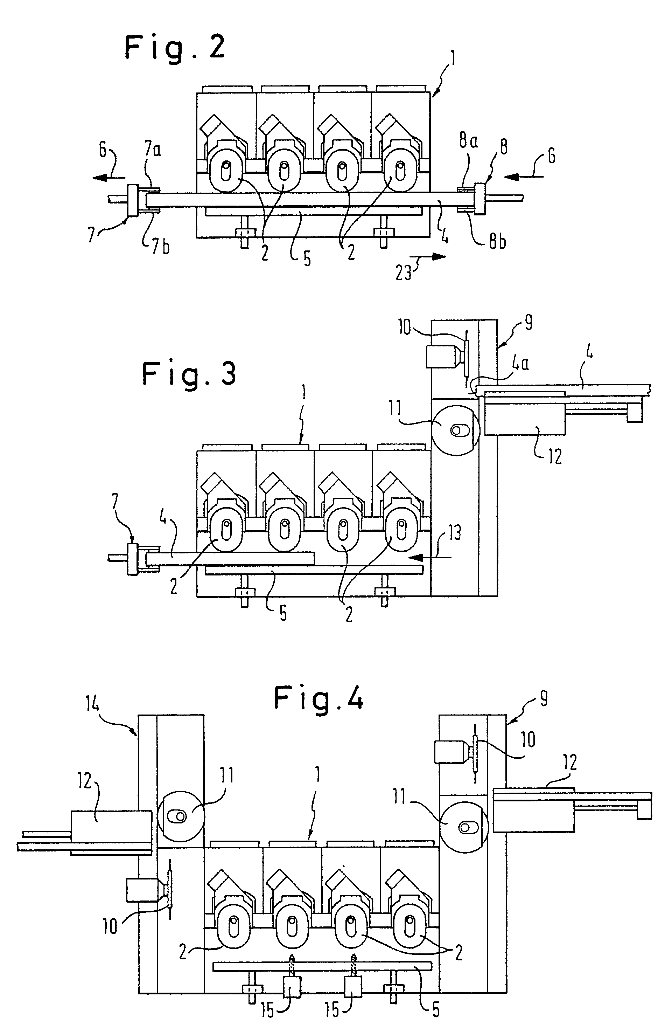

Das zu bearbeitende Fensterholz 4 wird an den Längsprofilierspindeln 2 in einer Führung in Form eines verstellbaren Anschlages 5 (vgl. Fig. 2) vorbeigeführt, wobei bei der Ausführungsform nach Fig. 1 an dem in Arbeitsrichtung 6 vorderen Ende des Fensterholzes 4 ein Greifer 7 angreift, der das Fensterholz in Arbeitsrichtung an den Längsprofilierspindeln 2 vorbeizieht. Während der Bearbeitung stützt sich das Fensterholz 4 gegen den Anschlag 5 ab.

Der Greifer 7 ist formschlüssig entlang der Vorschubbahn 6 innerhalb der Längsprofiliereinrichtung 1 bewegbar, so daß er in jeder Vorschublage eine genau festgelegte Position einnimmt. In dieser Position können die Längsprofilierspindeln 2 aus- bzw. eingerückt werden, was während der Bewegung des Werkstückes geschehen kann. Außerdem kann das Werkstück 4 in jeder Vorschublage lagegenau angehalten werden, so daß quer zur Vorschubrichtung wirkende Verarbeitungen, wie beispielsweise Bohrungen, vorgenommen werden können. Der Greifer kann hierzu formschlüssig angetrieben werden, beispielsweise durch eine Zahnstange, durch einen Zahnriemen, gegebenenfalls in Verbindung mit einer nc-Achse, durch eine Spindel oder dergleichen.

Da die Backen 7a und 7b des Greifers relativ zueinander verstellbar sein können, können mittels des Greifers Werkstücke unterschiedlicher Stärke sicher bewegt werden.

Wie aus Fig. 2 hervorgeht, kann neben dem am in Arbeitsrichtung vorderen Ende des Werkstückes 4 angreifenden Greifer 7 auch an dessen hinteren Ende ein weiterer Greifer 8 angeordnet sein, der synchron mit dem ersten Greifer 7 bewegbar ist und das Werkstück 4 in Arbeitsrichtung schiebt. Auf diese Weise kann der Spanndruck des ersten Greifers 7 in Grenzen gehalten werden. Unter Umständen kann der zweite Greifer 8 auch als reiner Schieber ausgebildet sein.

Soweit nur ein Greifer 7 vorgesehen ist, kann auch zunächst das Werkstück 4 an den Längsprofilierspindeln 2 vorbeibewegt werden, ohne daß deren Werkzeuge 3 sich in Eingriff befinden. Der Längsprofiliervorgang kann bei dieser Ausführungsform in Gegenrichtung zur Hauptarbeitsrichtung 6 vorgenommen werden, also auch entgegen der Hauptvorschubrichtung. Dies hat in diesem Fall den Vorteil, daß der Greifer 7 das Werkstück 4 während des Fräsvorganges nicht zieht, sondern schiebt und damit druckbelastet die Zerspanungskräfte aufnimmt.

Fig. 3 zeigt eine Holzbearbeitungsmaschine zur Herstellung von Fensterhölzern, bei welcher die erfindungsgemäße Vorrichtung einsetzbar ist. Die Holzbearbeitungsmaschine nach Fig. 3 besteht aus einer Einheit 9 zum Zapfenschlagen und Schlitzen, welche eine Ablängvorrichtung 10 und wenigstens eine Zapfenschlag- und Schlitzspindel 11 aufweist, mit welcher die Stirnseite 4a des Werkstückes 4 bearbeitet wird. Hierzu wird das Werkstück 4 auf einen Rolltisch 12 aufgespannt, mit welchem es an der Zapfenschlag- und Schlitzspindel 11 vorbeigeführt wird.

Aus der Zapfenschlag- und Schlitzeinheit 9 heraus wird das Werkstück 4 im rechten Winkel, d.h. in Richtung des Pfeiles 13 einer Vorrichtung zum Längsprofilieren übergeben, die derjenigen entspricht, die in Fig. 1 und 2 beschrieben ist. Diese Längsprofiliervorrichtung ist mit einer Vorschubeinrichtung der beschriebenen Art versehen, so daß das Fensterholz 4 lagegenau an den Längsprofilierspindeln 2 vorbeigeführt wird.

Da mithin Relativverschiebungen zwischen der Eingriffslage der Längsprofilierspindeln 2 und dem Werkstück 4 während des Längsprofiliervorganges nicht auftreten können, besteht die Möglichkeit, andere Bearbeitungen des Werkstückes 4 sowohl vor dem Längsprofiliervorgang als auch während dieses Vorganges als auch nach diesem Vorgang vorzunehmen.

Fig. 4 zeigt die Anwendung der erfindungsgemäßen Vorrichtung auf eine Holzbearbeitungsmaschine, bei welcher zwei Einheiten 9 und 14 zum Zapfenschlagen und Schlitzen vorgesehen sind, wobei die erste Einheit 9 die Zapfen und Schlitze an der ersten Stirnseite eines Fensterholzes und die Einheit 14 diese an der anderen Stirnseite des Fensterholzes anbringt. Zwischen diesen beiden Einheiten 9 und 14 ist die beschriebene Einrichtung 1 zum Längsprofilieren angeordnet, wobei beispielsweise mittels schematisch angedeuteter Bohraggregate 15 in das Fensterholz Bohrungen während des Längsprofiliervorganges eingebracht werden können. Hierzu muß natürlich der Vorschub des Fensterholzes angehalten werden. Es besteht aber auch die Möglichkeit, die zusätzlichen Aggregate mitlaufen zu lassen.

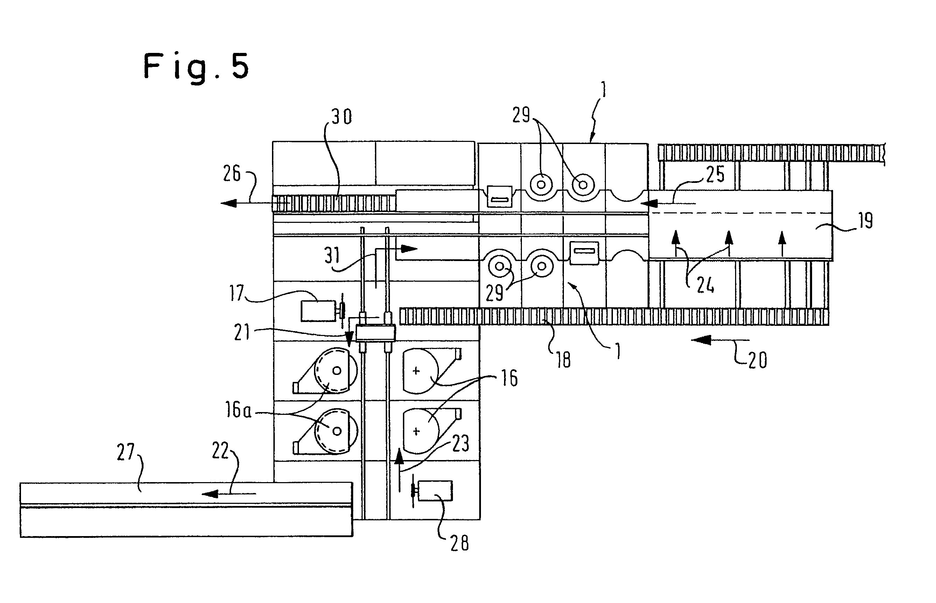

Fig. 5 schließlich zeigt in schematischer Darstellung eine Anlage zur Fensterherstellung, in welche ebenfalls die erfindungsgemäße Vorrichtung 1 zum Längsprofilieren integriert ist. Bei der Anlage nach Fig. 5 sind zwei Aggregate 16 zum Zapfenschlagen und Schlitzen vorgesehen, die unterhalb des Arbeitstisches in eine Lage 16a gebracht werden können, in welcher sie am jeweils anderen Ende des Werkstückes Zapfen und Schlitze anbringen können.

Das zu bearbeitende Fensterholz wird in Richtung des Pfeiles 20 über einen Rollenförderer 18 in die Anlage eingefördert, worauf sein vorderes Ende links in Fig. 5 mittels einer Ablängeinrichtung 17 abgelängt und sodann an den Zapfenschlag- und Schlitzspindeln in deren Lage 16a in Richtung des Pfeiles 21 vorbeigeführt wird. Nach der Längeneinsteuerung mittels eines Förderers 27 in Richtung des Pfeiles 22 wird mittels einer zweiten Ablängeinrichtung 28 das Fensterholz auf Maß gebracht, um dann in Richtung des Pfeiles 23 an den jetzt in der Lage 16 befindlichen Zapfenschlag- und Schlitzspindeln vorbeibewegt zu werden. Das so beidseitig mit Zapfen und Schlitzen versehene Werkstück wird nun am Rollenförderer 18 und der Ablängvorrichtung 17 vorbei der ersten Längsprofiliervorrichtung 1 in Richtung des Pfeiles 31 zugeführt und unter Verwendung des erfindungsgemäß vorgesehenen Transportelementes, welches hier nicht dargestellt ist, an den Längsprofilierspindeln 29 vorbeigeführt und an einer Seite längsprofiliert. Nach diesem Arbeitsgang gelangt das Werkstück auf einen Querförderer 19, der es in Richtung der Pfeile 24 bis in die vertikale Einzugsebene der zweiten Längsprofiliervorrichtung 1 transportiert. Dort wird es in Richtung des Pfeiles 25 an den Längsprofilierspindeln 29 vorbeibewegt und bei 26 über einen Rollenförderer 30 ausgefördert.

**Patentansprüche**

1.  Vorrichtung zum Längsprofilieren von Hölzern, insbesondere von Fensterhölzern, bei welcher in Reihe mehrere Längsprofilierspindeln angeordnet sind, an welchen die Hölzer mittels einer Vorschubeinrichtung vorbeigeführt werden, dadurch gekennzeichnet, daß die zu bearbeitenden Hölzer (4) durch ein Transportelement (7,8) bewegt werden, welches formschlüssig entlang der Vorschubbahn (16) innerhalb der Längsprofiliereinrichtung (1) bewegbar ist und zumindest kraftschlüssig mit dem jeweils zu bearbeitenden Holz (4) verbunden ist.

2.  Vorrichtung nach Anspruch 1, dadurch gekennzeichnet, daß eine lagegenaue zusätzliche Bearbeitung des Holzes (4) sowohl während des Längsprofiliervorganges als auch vor diesem als auch nach diesem vornehmbar ist.

3.  Vorrichtung nach Anspruch 1 oder 2, dadurch gekennzeichnet, daß das Transportelement (7,8) mittels einer Zahnstange, mittels eines Zahnriemens gegebenenfalls in Verbindung mit einer nc-Achse, mittels einer Spindel oder dergleichen angetrieben ist.

4.  Vorrichtung nach einem der vorgehenden Ansprüche, dadurch gekennzeichnet, daß an bestimmten Stellen des Werkstückes (4) genau bemessene Teilprofilierungen vernehmbar sind.

5.  Vorrichtung nach einem der vorhergehenden Ansprüche, dadurch gekennzeichnet, daß das Transportelement (7,8) lagegenau anhaltbar ist.

6.  Vorrichtung nach einem der vorhergehenden Ansprüche, dadurch gekennzeichnet, daß an lagegenau bestimmten Stellen Bohrungen in die Werkstücke (4) einbringbar sind.

7. Vorrichtung nach einem der vorhergehenden Ansprüche, dadurch gekennzeichnet, daß lagegenau die Anbringstellen für Beschläge in das Werkstück (4) einbringbar sind.

8. Vorrichtung nach einem der vorhergehenden Ansprüche, dadurch gekennzeichnet, daß lagegenau Schrauben oder andere Befestigungsmittel an das Werkstück (4) anbringbar sind.

9. Vorrichtung nach einem der vorhergehenden Ansprüche, dadurch gekennzeichnet, daß lagegenau Bearbeitungen der Werkstücke (4) von oben vornehmbar sind.

10. Vorrichtung nach einem der vorhergehenden Ansprüche, dadurch gekennzeichnet, daß das Transportelement als wenigstens ein Greifer (7,8) ausgebildet ist.

11. Vorrichtung nach Anspruch 10, dadurch gekennzeichnet, daß der Greifer (7) das Werkstück (4) an dessen in Arbeitsrichtung (6) vorderen Ende erfaßt und durch die Längsprofiliereinrichtung (1) zieht.

12. Vorrichtung nach Anspruch 10, dadurch gekennzeichnet, daß der Greifer (8) an dem in Arbeitsrichtung (6) hinteren Ende des Werkstückes (4) angreift und das Werkstück (4) in Form einer Schiebebewegung transportiert.

13. Vorrichtung nach Anspruch 12, dadurch gekennzeichnet, daß das Transportelement (8) als reiner Schieber ausgebildet ist.

14. Vorrichtung nach einem der Ansprüche 10 bis 12, dadurch gekennzeichnet, daß an beiden Enden des Werkstückes (4) Greifer (7,8) vorgesehen sind.

15. Vorrichtung nach Anspruch 14, dadurch gekennzeichnet, daß die Greifer (7,8) an beiden Enden des Werkstückes (4) synchron bewegbar sind.

16. Vorrichtung nach einem der Ansprüche 10 bis 12 und 14 und 15, dadurch gekennzeichnet, daß die Öffnung der Greifer (7,8) einstellbar ist.

17. Vorrichtung nach einem der Ansprüche 10 bis 12 und 16, dadurch gekennzeichnet, daß das Werkstück (4) zunächst an den Frässpindeln (2) ohne Eingriff von deren Werkzeugen (3) vorbeiführbar und dann in Gegenrichtung (23) mittels eines am in Arbeitsrichtung (6) vorderen Ende des Werkstückes (4) angreifenden Greifers (7) in Gegenrichtung (23) drückbar ist.

18. Vorrichtung nach einem der vorhergehenden Ansprüche, dadurch gekennzeichnet, daß die Werkstücke (4) in einer Führung, vorzugsweise in Form eines Anschlages (5) während des Bearbeitungsvorganges geführt sind.

19. Vorrichtung nach einem der vorhergehenden Ansprüche, dadurch gekennzeichnet, daß die Vorrichtung auf eine Holzbearbeitungsmaschine angewendet wird, die aus wenigstens einer Einrichtung (9) zum Zapfenschlagen und Schlitzen und aus wenigstens einer Vorrichtung (1) zum Längsprofilieren mit einer Vorschubeinrichtung besteht, deren Vorschubbahn (13) im rechten Winkel zur Bewegungsbahn des Werkstückes (4) im Bereich der Zapfen- und Schlitzeinrichtung (9) liegt.

# Fig.1

EP 0 456 850 A1

Fig. 2

Fig. 3

Fig.4

7

Fig.5

**Europäisches Patentamt**

# EUROPÄISCHER RECHERCHENBERICHT

Nummer der Anmeldung

## EP 90 10 9052

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| E | DE-A-3 900 304 (OKOMA)<br>* das ganze Dokument * | 1-19 | B 27 F 1/02<br>B 27 C 5/06<br>B 27 C 9/04 |
| X | DE-A-3 019 692 (RAPID MASCHINENBAU)<br>* Seite 7, Absatz 1 - Seite 9, letzter Absatz; Figuren * | 1-6,9,10,<br>12,13,16,<br>17 | |
| X,A | EP-A-0 164 063 (FREY)<br>* Seite 2, Zeile 1 - Seite 5, Zeile 2; Figuren 1, 2, 5 * | 1-6,10,16 | |
| A | DE-C-3 823 634 (LUTZ)<br>* Spalte 3, Zeilen 6 - 14 ** Spalte 5, Zeilen 26 - 31; Figuren 1, 2 * | 1-6,9,10,<br>12 | |
| A | DE-C-5 588 87 (FLECK)<br>* Figur 1 * | 1,4,9,13 | |
| A | GB-A-3 964 (1909)<br>* Figur 2 * | 18 | |
| A | FR-A-2 453 716 (OKOMA)<br>* Figur * | 19 | RECHERCHIERTE SACHGEBIETE (Int. Cl.5)<br><br>B 27 F<br>B 27 C<br>B 27 M |

Der vorliegende Recherchenbericht wurde für alle Patentansprüche erstellt

| Recherchenort | Abschlußdatum der Recherche | Prüfer |
|---|---|---|
| Den Haag | 26 November 90 | HUGGINS J.D. |